Europäisches Patentamt

(19) European Patent Office

Office européen des brevets

(11) **EP 0 909 106 A2**

## (12) EUROPEAN PATENT APPLICATION

(43) Date of publication:
**14.04.1999 Bulletin 1999/15**

(51) Int. Cl.⁶: **H04Q 11/04**, H04L 12/56

(21) Application number: **98114101.3**

(22) Date of filing: **28.07.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **10.10.1997 US 966603**

(71) Applicant:
**MITSUBISHI DENKI KABUSHIKI KAISHA**
Tokyo 100-8310 (JP)

(72) Inventors:
• **Yokotani, Tetsuya**
  **Kamakura Kanagawa (JP)**
• **Zheng, Qin**
  **Boxborough, Massachusetts 01719 (US)**

(74) Representative:
**Pfenning, Meinig & Partner**
**Mozartstrasse 17**
**80336 München (DE)**

(54) **Implementation schemes for a queue length based ABR flow control system**

(57)     In an ATM network, a traffic management system is provided to allow simple and effective implementation of rate-based available bit rate, or ABR, flow control at ATM switches, with the subject system using an innovative queue length based approach to calculate the cell rate that a source system can use to send cells. In one embodiment, the cell rate is calculated as an exponential function of the cell queue length at a switch, and the rate value is carried back to a source system via resource management, or RM, cells. The exponential rate calculation function provides a large stability region for a network for better flow control performance than other systems, with the subject system being easy to implement in ATM switches. In terms of implementation, in one embodiment an ATM switch node consists of a line termination block, a switching block, or a control block. The processing of resource management, or RM, cells to support the QL-based flow control is performed by the line termination block, switching block or control block. The QL algorithm can either be invoked periodically or invoked when a resource management cell is detected. The former case is referred to as "periodic basis". The latter case is referred to as "event basis". In addition to implementing a QL algorithm at a switch node, the subject invention also permits a variation of the QL-based flow control scheme by using a QL field in an RM cell to allow a QL algorithm to be implemented at a source end system, destination end system, or selected switch nodes.

FIG. 1

EP 0 909 106 A2

## Description

FIELD OF THE INVENTION

This invention relates to traffic control in a digital communication network and more particularly to schemes for implementing a queue length based algorithm to realize effective Available Bit Rate, or ABR, flow control in ATM networks.

BACKGROUND OF THE INVENTION

In transmission of data over a cell switched digital communication network, such as an asynchronous transfer mode or ATM network, problems arise when multiple sources sent data cells at widely varying rates through a switch node or link of the network at an aggregated rate which taxes the ability of that switch node or link to handle the data. Congesting occurs at the node of a network when data arrives at the node at a rate exceeding the rate at which the node can process and forward the data to other nodes. The excess data then accumulates in buffer storage at the node, which fills at a rate which is the difference between the arrival rate and the processing and forwarding rate. If the congestion persists for long periods of time, the buffer storage will be filled to maximum capacity and any additional data must be discarded.

In an effort to minimize such data loss, an available bit rate of ABR flow control scheme has been developed to prevent or inhibit excess data from entering the network. With ABR flow control, the rate at which the data is permitted to enter the network is controlled to not exceed an allowable cell rate, of ACR, and this ACR is adjusted via a feedback signal, usually in a form of resource management, or RM, cells from a network reflecting the congestion of the network. One such ABR flow control scheme is described in an ATM Forum document af-tm-0056.000 entitled "Traffic Management Specification Version 4.0" authored by the ATM Forum Technical Committee, April 1996.

However, the ABR flow control scheme described in the above ATM Forum document describes mostly the source and destination system behaviours and leaves the switch system behaviour unspecified. Although several example switch mechanisms have existed in the past, these mechanisms are either known to not work well, e.g., with fairness and stability problems, or are complicated to implement in switches, e.g., requiring accurate estimation of the ABR traffic load an fair sharing of bandwidth for each ABR connection. Furthermore, none of the switch mechanisms have analytical proof for stability and performance. Most of them were only shown to work by simulations in very small scale networks under very limited traffic conditions. In order to have a complete ABR control scheme for vendors to implement in existing ATM networks, it is thus very important to develop an ATM Forum compliant ABR flow control mechanism which is both easy to implement and effective in achieving the objective of ABR flow control, namely making efficient use of network resources.

One such flow control mechanism is described in a U.S. patent application, Serial No. 08/820,554, filed March 19, 1997, entitled "A QUEUE LENGTH BASED ABR FLOW CONTROL SYSTEM" and incorporated herein by reference, that uses a queue length based approach to calculate the rate that a source system can use to send cells. Specifically, when a switch node receives an RM cell, it calculates a desired cell transmission rate for this connection based on the current cell queue length build-up at the switch node. If this rate value is smaller than the value contained in the ER field of the RM cell, the ER field is updated with this new calculated value. A destination end system returns all received RM cells to their source end systems which in turn adjust cell transmission rates according to the values contained in the ER field of the received RM cells. In one embodiment of the QL-based flow control scheme, the desired cell rate is calculated as an exponential function of the cell queue length at a switch node which provides a large stability region for the flow controlled network.

More specifically, in this patent application a Queue Length, QL, based ABR flow control system for an ATM switch node is utilized in which a desired cell transmission rate is calculated according to the current cell queue length build-up at the switch node. The calculated rate value is carried back to a source node via RM cells and the rate value is used by the source node to adjust its cell transmission rate.

The effectiveness of a switch ABR flow control scheme can be measured by its responsiveness, stability, and fairness. Responsiveness requires an ABR scheme to respond to network load changes quickly. Specifically, when the network traffic load increases, a switch should notify a source to reduce its transmission rate quickly to avoid further network congestion. Failure of doing this may cause switch buffer overflow and cell losses. On the other hand, when network traffic decreases, a switch should allow a source to increase its transmission rate. Failure of doing this may cause an under-utilization of network resources. Stability means that an ABR flow control scheme should not change a source's cell transmission rate too dramatically as to cause oscillations of a source's cell transmission rate. Big rate oscillations recude a connection's quality and network bandwidth utilization. An ABR flow control scheme should also be fair to all connections so that they get equal share of network bandwidth when congestion occurs.

This QL-based system improves the responsiveness of ABR flow control by setting the absolute rate value according to the cell queue length at a switch. This is in contrast to other flow control schemes which use queue length to determine the amount of increment/decrements of cell rate. To address the stability issue, this system uses an exponential function to convert a queue length value to a rate value. This exponential function has been proved to provide the system with a large stability region. The ABR flow control system achieves fairness by using the absolute rate setting, instead of incremental rate setting, and having a source system using the minimum rate set by all switches on its route. Finally, this system is easy to implement in ATM switches.

SUMMARY OF THE INVENTION

The above QL-based ABR flow control system is implemented by invoking the QL algorithm either periodically or when a resource management cell is detected.

In order to implement the periodic basis or event basis scheme, in one embodiment, an ATM switch node consists of a line termination block, or LT, a switching block, or SW, a control block, or CNT. The processing of resource management, or RM, cells to support the QL-based flow control is performed by the line termination block, switching block, or control block. Schemes to process the RM cells according to the QL algorithm are summarized as follows:

Scheme 1    : Processing at the control block on a periodic basis
Scheme 2:   Processing at the control block on an event basis
Scheme 3:   Processing at the line termination block on a periodic basis
Scheme 4:   Processing at the line termination block on an event basis
Scheme 5:   Processing at the switching block on a periodic basis
Scheme 6:   Processing at the switching block on an event basis

In addition to implementing a QL algorithm at a switch node, the subject invention also presents a variation of the QL-based flow control scheme by using a QL field in an RM cell to allow a QL algorithm to be implemented at a source end system, destination end system, or selected switch nodes.

BRIEF DESCRIPTION OF DRAWINGS

These and other features of the Subject Invention will be better understood in conjunction with the Detailed Description taken in accordance with the Drawings of which:

Figure 1 is a schematic diagram illustrating an ABR flow control loop in which RM cells are generated by a source system, processed by switches in a network, and turned around by a destination system to carry network congestion information back to the source systems;

Figure 2 is a schematic diagram illustrating an ATM switch mode with incoming links, outgoing links, queue buildup at an outgoing link, and an RM cell processor within the switch;

Figure 3 is a schematic diagram illustrating the functionality of the RM cell processor of Figure 2 that converts a queue length value into a rate value and writes the rate value into an ER field of passing RM cells;

Figure 4 is a schematic diagram illustrating a cell queuing point within a switch and associated variables used to perform stability analysis of the subject system;

Figure 5 is a diagram showing the rate converting functions with different values of RM cell feedback delay;

Figure 6 is a diagram showing the switch buffer requirements with the subject flow control system;

Figure 7 is a schematic diagram illustrating an example implementation of the subject system in a switch with a central buffer architecture, also showing a processor on a CPU card performing the rate converting function and RM cell processing at switch line cards;

Figure 8 is a schematic diagram illustrating an ATM network with source end system, a switching system, and destination end systems;

Figure 9 is a schematic diagram illustrating a node in a switching system;

Figures 10, 11 and 12 and 13 are schematic diagrams illustrating routes of RM cells and routes of control signals to process these RM cell in a node;

Figure 14 is a schematic diagram illustrating strategies to update the ER field of an RM cell in a node;

Figure 15 is a schematic diagram illustrating exclusive control between access from a control block and access from a module to update the ER field of an RM cell to a switch fabric;

Figure 16 is a schematic diagram illustrating a timing chart in the exclusive control;

Figure 17 is a schematic diagram illustrating a format of an RM cell specified in the ATM Forum;

Figures 18 and 19 are schematic diagrams illustrating points which convert the QL field to the ER field in an RM cell;

Figure 20 is a schematic diagram illustrating a format of an RM cell with several QL fields; and,

Figure 21 is a schematic diagram illustrating operations for updating multiple QL fields.

## DETAILED DESCRIPTION

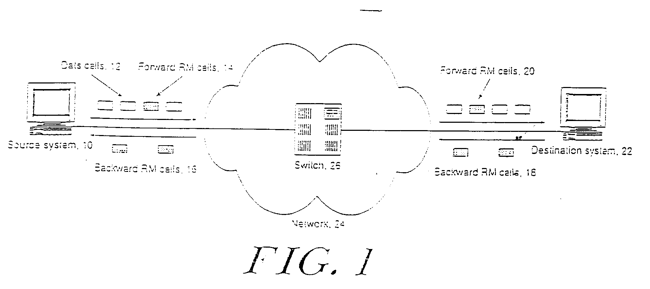

By way of further background and referring now to Figure 1, transmission of digital data over an ATM network and a framework of ABR flow control is shown. An ATM network 24 with one or more switch nodes 26 is utilized to connect a source system 10 to a destination system 22. Source system 10 generates data cells 12 together with forward RM cells 14. According to the ATM Forum traffic management specification, for each ABR connection, one forward RM cell is generated in every Nrm cell transmitted, where Nrm is a parameter of the ABR connection. These cells are forwarded by one or more switch nodes 26 within the network to their destination systems 22. A destination system consumes data cells, converts forward RM cells into backward RM cells 18, and sends backward RM cells back to their source system 10 via network 24. Switch 26 writes network congestion information in the forward and/or backward RM cells. After receiving backward RM cells 16, source system 10 adjusts its cell transmission rate according to the congestion information contained in the cells, in accordance with an ATM Forum document af-tm-0056.000 entitled "Traffic Management Specification Version 4.0" authored by the ATM Forum Technical Committee, April 1996 which contains a detailed description of the ATM Forum flow control specification.

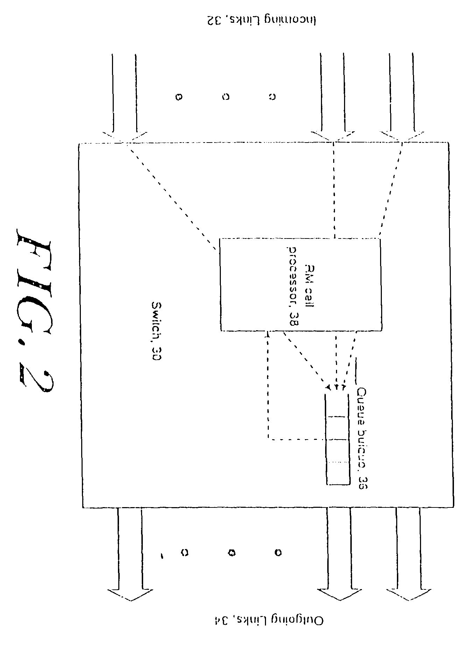

Referring now to Figure 2, this figure shows cell flows within a switch node 30 in an ATM network 24 of Figure 1 and the usage of an RM cell processor 38 to perform ABR flow control functions. Data and RM cells enter switch 30 through incoming links 32 and leave the switch through outgoing links 34. When the aggregated incoming rate of cells exceeds the transmission rate of an outgoing link from which the cells leave the switch, a cell buffer 36 is needed to temporarily store cells so that they can be sent when the outgoing link bandwidth becomes available. The number of cells in the cell buffer 36, of queue length, is inputted to the RM cell processor 38. RM cell processor 38 uses this queue length information to update passing RM cells.

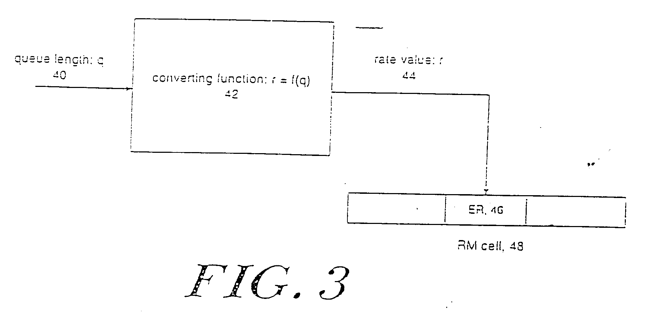

Referring now to Figure 3, more details about the updating of RM cells by RM cell processor 38 of Figure 2 are discussed. As stated in the ATM Forum ABR flow control specification, when a source system receives a backward RM cell, it will adjust its cell transmission rate for the connection to be no more than the Explicit Rate, or ER, value contained in the ER field 46 of the RM cell. Thus an RM cell processor of a switch can control a source system's transmission rate via setting the ER field of passing RM cells. The subject invention requires an RM cell processor to perform one or both of the following RM cell processing functions:

First, for each forward RM cell received by the switch, the RM cell processor reads the queue length value 40 of the outgoing link from where the received RM cell is to leave the switch, converts the queue length value q into a cell rate value r, 44, using a converting function 42, and if the rate value 44 is smaller than the value of ER field 48 of the RM cell, sets ER field 46 with rate value 44.

Secondly, for each backward RM cell received by the switch, the RM cell processor reads the queue length 40 value of the outgoing link from where the data cells of the same connection as the RM cells leaves the switch, converts the queue length q into a cell rate value r, 44, using a converting function 42, and if the rate value 44 is smaller than the value or ER field 48 of the RM cell, sets ER field 46 with rate value 44.

The converting function 42 has a big impact on the ABR flow control performance. Inappropriate selection of a converting function may reduce the responsiveness and cause instability of ABR flow control. The subject invention uses a special exponential converting function derived from a dynamic control theory as described below.

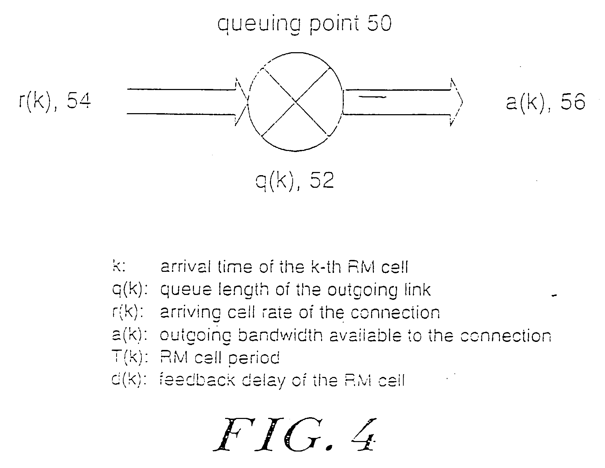

Referring now to Figure 4, queuing analysis for a connection at a queuing point 50 of an outgoing link of a switch is performed. Let t(k) denote the arrival time of the k-th RM cell of the connection. q(k) 52 is used to represent the queue length at the queuing point at time t(k). r(k) 54 and a(k) 56 are used to represent the connection's average cell arriving rate at the incoming link and the average cell departing rate at the outgoing link between time t(k) and t(k+1), respectively. Let T8k)=t(k+1)-t(k) be the RM cell arrival period. Notice that after a switch sets a rate value in an RM cell, there is a feedback delay before the switch observes a change in the incoming cell rate. In other words, it takes some time for the RM cell to get back to its source system and cells with a changed transmission rate to reach the switch. Let d(k) be this feedback delay at time t(k) in a unit of RM cell period. Specifically, the incoming cell rate at time t(k) is determined by the rate value set in the (k-d(k))-th RM cell.

To study the dynamic behaviour of an ABR connection, let the queuing point shown in Figure 4 be a bottleneck point of the connection. In other words, one can assume that the connection will send cells using the rate value set at this queuing point. With the notations shown in Figure 4, one has the following relations:

$$q(k+1)=q(k)+T(k) \ (r(k)-a(k)) \tag{1}$$

$$r(k)=f(q(k-d(k))) $$

The physical meaning of the above equation is that the queue length at the time when the next RM cell arrives equals the current queue length plus the cell accumulation during the current RM period, and the current cell arriving rate of the connection equals the rate value set at this queuing point d(k) RM cells ago.

With the above notations, we can now perform stability analysis of a connection under ABR flow control. Let r(k)=r, q(k)=q, T(k)=T be an equilibrium point of the connection under the condition of a(k)=a, and d(k)=d. In other words, one assumes that the system will reach a steady state with all variables illustrated in Figure 4 stay at constant values if the bandwidth available to the connection and the feedback delay stay at constant for a sufficiently long period of time. Then stability of an ABR flow control scheme requires that if for any reason the state variables, i.e., r(k) and q(k), leave the equilibrium point, they will return to the equilibrium point again. One reason for the system to leave its current equilibrium point is due to a change in the bandwidth available to a connection, e.g., after an addition or removal of some other connections sharing the same transmission link. Thus a stable ABR flow control system will make the cell transmission rate of a connection stabilize at a new equilibrium point instead of oscillating forever.

Let

$$\delta q(\kappa)=q(\kappa)-q \tag{2}$$

$$\delta r(\kappa)=r(\kappa)-r $$

be the pertuburbation of the queue length and cell arriving rate from their equilibrium point. From equations (1), we have

$$\delta q(k+l) = \delta q(k)+T\delta r(k) \tag{3}$$

$$\delta r(k) = f'(q)\delta q(k-d) $$

Substituting $\delta r(\kappa)$ into the first equation, we have

$$\delta q(k+l) = \delta q(k)+Tf'(q)\delta q(k-d) \tag{4}$$

From the discrete control theory, the dynamic system (4) is stable if and only if the following equation is stable, i.e., equation (5) has roots within the unit circle:

$$Z^{d+1}-Z-Tf'(q) = 0 \tag{5}$$

Using simulations, the stability condition for equation (5) can be obtained as follows:

$$f'(q) \leq -\frac{g(d)}{T} \tag{6}$$

Where the values of g(d) as a function of the feedback delay d is shown in the following tables:

TABLE I

| d | 1 | 2 | 3 | 4 | 5 | 6 | 7 | 8 |
|---|---|---|---|---|---|---|---|---|
| g(d) | 1 | 0.62 | 0.45 | 0.35 | 0.29 | 0.24 | 0.21 | 0.19 |

TABLE II

| d | 9 | 10 | 11 | 12 | 13 | 14 | 15 | 16 |
|---|---|---|---|---|---|---|---|---|
| g(d) | 0.17 | 0.15 | 0.14 | 0.13 | 0.12 | 0.11 | 0.10 | 0.095 |

In the equilibrium state, Nrm cells arrive in a time period of T, where Nrm is an ABR parameter defined in the ATM Forum specification which requires a source system to send one forward RM cell in every Nrm cell sent. Thus we have the cell arrival rate:

$$r = f(q) = \frac{Nrm}{T}$$

Then the stability condition of (6) can be expressed as

$$f'(q) \leq -\frac{g(d)}{Nrm} f(q) \tag{8}$$

This leads to a rate converting function that satisfies the stability condition above:

$$r = f(q) = PCR \times e^{\left(-\frac{g(d)}{Nrm} q\right)} \tag{9}$$

where PCR is the peak cell rate that a connection can use to send cells as defined by the ATM Forum specification.

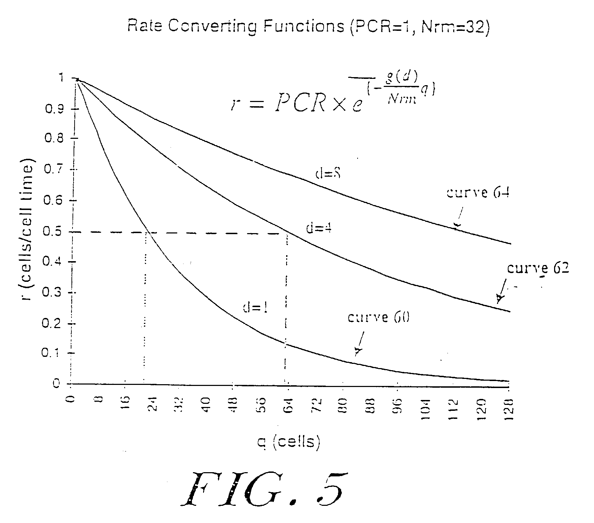

Referring now to Figure 5, several examples of the rate converting function with different values of feedback delay d are shown. If curve 60 is used as the rate converting function, then it is guaranteed that the subject ABR flow control scheme is stable as long as the feedback delay is no larger than the RM period T. Similarly, if one uses curve 62 or curve 64 as the rate converting function, it is guaranteed that the system is stable as long as the feedback delay is no larger than 4T or 8T. From the stability consideration, a large d should be used in selecting a rate converting function at a switch this gives a large stability region of the actual feedback delay. However, a large d also increases the buffer requirement at a switch. For example, one can see from Figure 5 that for d=1, a buffer of 22 cells is needed to throttle the transmission rate of a connection to half of its peak bandwidth PCR. If d is increased to 4, a buffer of 64 cells is needed to support the same transmission rate.

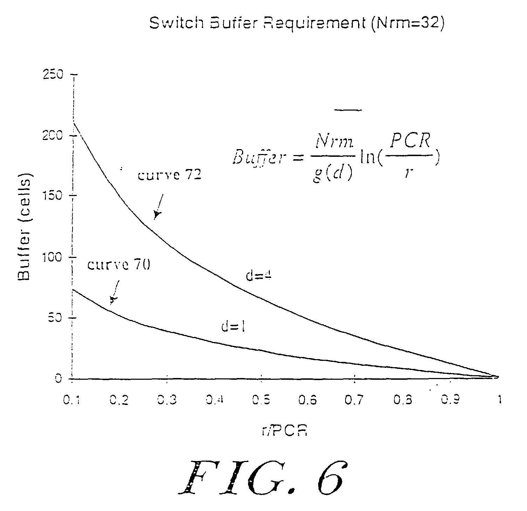

Referring now to Figure 6, the buffer requirement at a switch is shown. Curve 70 and curve 72 illustrate two examples with d=1 and d=4, respectively. This relationship can be used to determine the amount of buffer needed to support ABR flow control, or to determine the maximum feedback delay of d one can support with a given amount of buffer at a switch.

One interesting fact to observe from Figure 6 is that the minimum rate a switch can support with a given amount of buffer and a d selection depends on the peak cell rate, PCR. A large PCR value allows a connection to ramp up to a high transmission rate when a network is not heavily loaded. However, from Figure 6, it also requires more buffer at a switch to throttle the transmission rate of a connection when a network is heavily loaded. One way to increase the rate adjustment range of a switch with a given amount of buffer is to set the PCR dynamically by using an estimated bandwidth available to the connection. For example, PCR can be set to the value of bandwidth available to the ABR traffic divided by the number of active ABR connections sharing the bandwidth. Another way is to reduce or PCR when the queue length reaches some predefined thresholds, and increase PCR when the queue length falls below some predefined thresholds. It should be noted that the queue length thresholds should not be set to be too close to each other.

Otherwise, it would be equivalent to reducing the feedback value d which affects the stability of the scheme.

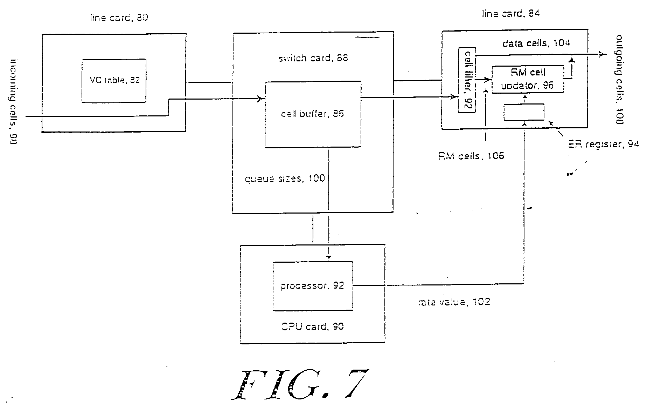

Referring now to Figure 7, an implementation of the subject ABR flow control system in an ATM switch with a central shared buffer architecture is presented. Incoming cells 98 arrive at a line card 80 which modifies the cell headers according to information stored in a VC table 82. These cells are then forwarded to a switch card 88 and stored in a central cell buffer 86. When outgoing bandwidth is available, cells stored in cell buffer 86 are forwarded to a corresponding line card 84 and leave the switch as outgoing cells 108. For each outgoing link, switch card 88 maintains a queue length value which records the number of cells currently residing in cell buffer 86 that are destined for the outgoing link. Processor 92 in CPU card 90 periodically reads queue sizes 100 from switch card 88 for all outgoing links of the switch. These queue size values are then converted to rate values using a rate converting function as illustrated in Figure 5 by processor 92. The calculated rate value is written in an ER register 94 of its corresponding line card 84. When cells are transferred from switch card 88 to line card 84, ordinary data cells 104 are transmitted by the line card without changes. When RM cells 106 are detected by cell filter 92, they are routed to RM cell processor 96. The RM cell processor compares the ER field in the RM cell with ER register 94. If the value in the ER field of the RM cell is larger than the value stored in the ER register 94, the rate value in the ER register 94, the rate value in the ER register is written into the ER field of the RM cell. Otherwise, the RM cell remains unchanged. The RM cell is then transmitted by the line card.

It should be noted that the above described RM cell processing can be performed for both forward and backward RM cells. For a forward RM cell, the length of the cell queue destined for the outgoing link from where the RM cell is transmitted is used to calculate the rate value. For a backward RM cell, the length of the cell queue destined for the outgoing link from where the forward RM cells of the same connection is transmitted is used to calculate the rate value. Thus if backward RM cells are to be processed at a switch, multiple ER registers 94 will be needed with each storing a value corresponding an outgoing link of the switch.

For switches with an output buffer architecture where cells are queued at each outgoing line card instead of a central switch card, the function of converting a queue size value to a rate value can be performed at each individual line card, either periodically or at a time an RM cell is to be transmitted. To support backward RM cell processing, line cards need to communicate periodically so each line card knows the rate values of all outgoing links.

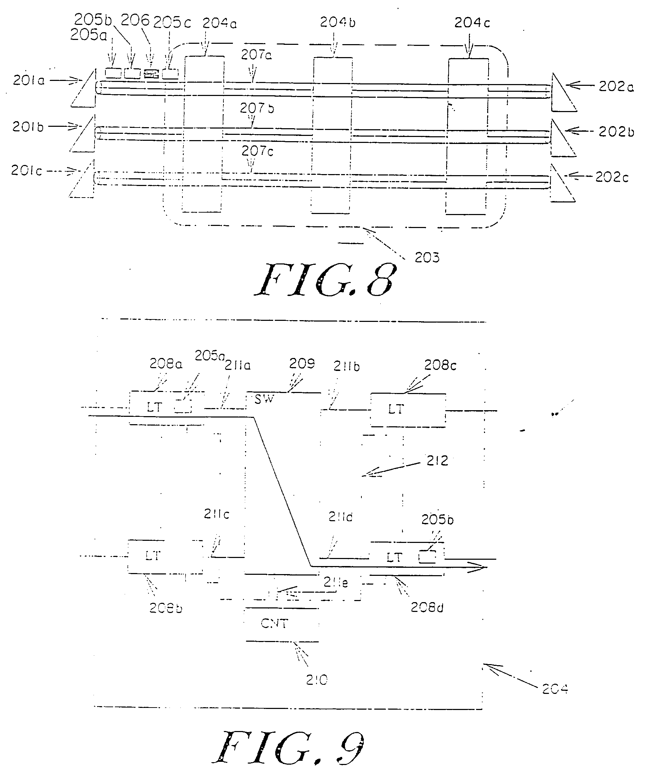

More specifically, Figure 8 shows the configuration of an ATM network. Source end systems 201 transfer ATM data cells 205 for user communication, and resource management or RM cells 206 for controlling transmission rates through ATM connections 207 which are established between source and destination end systems 202. A switching system 203 consisting of ATM switch nodes 204 switches ATM cells according to their ATM connection identifiers.

Figure 9 shows the configuration of an ATM node 204 in a switching system. The node consists of line terminating blocks 208, a switching block 209, and a control block 210. Line termination blocks 208 and switching block 209 are connected by transmission lines based on ATM cells 211. Control block 210 and switching block 209 are also connected by transmission lines based on ATM cells 211. Control block 210 and the other blocks are connected by dedicated lines 212. An incoming user cell 205 is transferred from a source line termination block 208a to switching block 209, and is temporarily stored there until a destination line termination block 208d is ready to fetch and transmit it.

An incoming RM cell is processed by one of the following schemes.

Scheme 1:

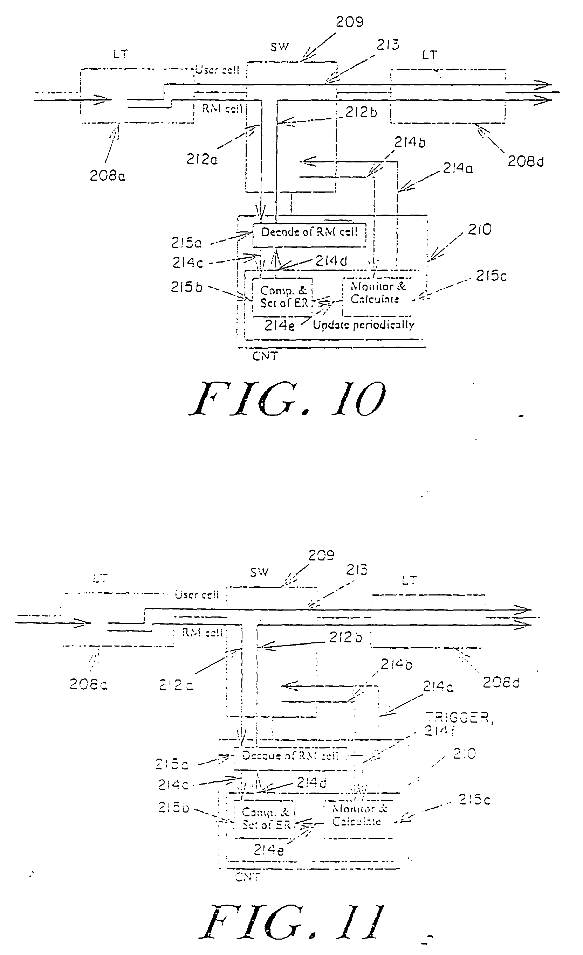

Figure 10 shows the route of RM cells in an ATM node and functions of the control block to process RM cells. An incoming RM cell is transferred to control block 210 from the source line termination block 208a via switching block 209 along the route based on ATM cells 212a. After it is processed at control block 210, it is transferred to the destination line termination block 208d via switching block 209 along route 212b. An incoming user cell is transferred to the destination line termination block 208d from the source line termination block 208a via switching block 209 directly by the route 213. With regard to the process of an RM cell, the cell's ER field is compared with the calculated ER value and is updated at sub-block 215b according to the mechanism of ER mode specified in the ATM Forum, after the RM cell is decoded at sub-block 215a. Then, the updated ER field is set to the RM cell at sub-block 215a. The calculation of the ER value is periodically executed at sub-block 215c. Sub-block 215c accesses switching block 209 by using the dedicated route 214a, and obtains the number of stored cells periodically by route 214b. Sub-block 215c calculates the ER value based on the monitored value according to the QL algorithm, and transfer the calculated ER value to an adjacent sub-block 215b.

Scheme 2:

Figure 11 shows the route of RM cells in an ATM node and functions in control block to process RM cells. An incoming RM cell is transferred to control block 210 form the source line termination block 208a via switching block 209 along the route based on ATM cells 212a. An incoming user cell is transferred to the destination line termination block 208d from the source line termination block 208a via switching block 109 directly by route 213. With regard to the processing of the RM cell, when an incoming RM cell is recognized at sub-block 215a, a trigger to invoke the QL algorithm 214f is coupled to sub-block 215c. Sub-block 215c accesses switching block 209 by using the dedicated route 214a, and obtains the number of stored cells at that time. This sub-block, e.g., sub-block 215c, calculates the ER value based on the monitored value according to the QL algorithm, and transfers the calculated ER value to an adjacent sub-block 215b. The ER field of an incoming RM cell is compared with the calculated ER value and is updated at sub-block 215b according to the mechanism of the ER mode specified in the ATM Forum. After it is processed at control block 210, it is transferred to the destination line termination block 208d via switching block 209 along route 212b.

Scheme 3:

Figure 12 shows that incoming RM and user cells are together transferred to the destination line termination block 208d from the source line termination block 208a via switching block 209 over route 216. At the destination line termination block 208d, an RM cell is distinguished from the cell stream at sub-block 217a. The RM cell is decoded, and its ER field is updated according to the mechanism of the ER mode specified in the ATM Forum at sub-block 217b. The calculation of the ER value is periodically executed at sub-block 215c. Sub-block 215c accesses switching block 209 using dedicated route 214a, and obtains the number of stored cells periodically by route 214b. This sub-block, e.g., sub-block 215c, calculates the ER value based on the monitored value according to the QL algorithm, and transfers the calculated ER value to sub-block 217b in the destination line termination block by route 214g.

Scheme 4:

Figure 13 shows that incoming RM and user cells are together transferred to the destination line termination block 208d from the source line termination block 208a via switching block 209 over route 216. At the destination line termination block 208d an RM cell is distinguished from the cell stream at the sub-block 217a. The RM cell is decoded and a trigger to invoke the QL algorithm 214h is coupled to sub-block 215c by sub-block 217b.

Sub-block 215c accesses switching block 209 by using dedicated route 214a, and obtains the number of stored cells at that time. Sub-block 215c calculates the ER value based on the monitored value according to the QL algorithm, and transfers the calculated ER value to sub-block 217b in the destination line termination block by route 214g. The ER field of an incoming RM cell is compared with the calculated ER value and is updated at sub-block 217b according to the mechanism of the ER mode specified in the ATM Forum.

It should be noted that Schemes 3 and Scheme 4 also apply to a switch node in which cells are temporarily stored in line termination blocks instead of the switching block, with the Monitor & Calculate block in the control block being moved to each line termination block and the cell queue length values being read from the line termination blocks.

Scheme 5:

Sub-blocks 217a and 217b in the destination line terminating block shown in Figure 11 are moved to the switching block.

Scheme 6:

Sub-blocks 217a and 217b in the destination line termination block shown in Figure 13 are moved to the switching block.

In Schemes 2, 4 and 6, when an incoming RM cell is recognized at a node, the calculation to derive the ER value is executed, and the ER field of this RM cell can be updated. However, the ER field of other RM cells instead of the incoming RM cell can be updated.

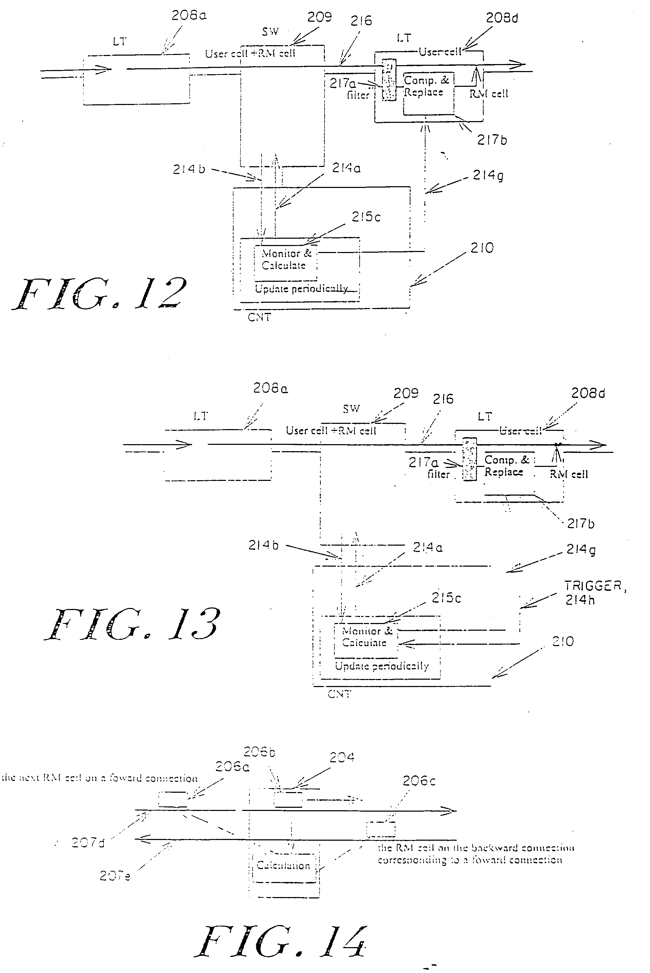

Figure 14 shows examples which present the update timing of the ER field. In Figure 14, when an incoming RM cell 206b on a forward connection 207d is received at node 204 the ER value is calculated to update its ER filed. Then, the value can be set to other RM cells, such as the next incoming RM cell 206a, on a forward connection 207d, or the incoming RM cell 206c on the backward connection 207e corresponding to a forward connection, instead of this incoming RM cell 206b.

In Scheme 6, since it is desirable that RM cells are processed as soon as possible, in this case the ER value of the current receiving RM cell is updated without disturbance to the cell stream. Moreover, the RM cells are processed based on hardware.

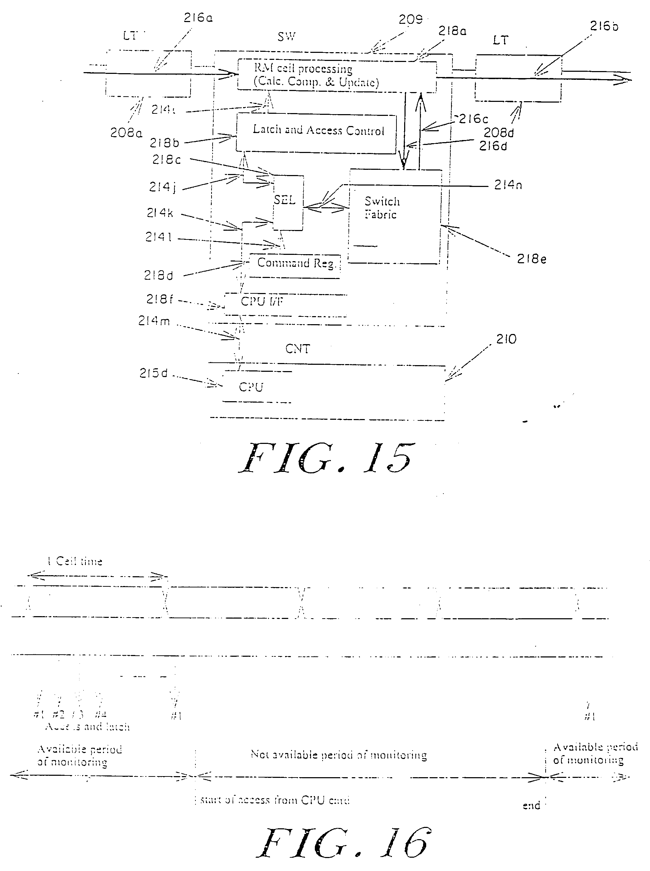

Figure 15 shows the block diagram of this hardware, and Figure 16 shows the abstract of the timing chart used by the hardware of Figure 15. Operations to update the ER field in the incoming RM cell is explained in Figure 15 and Figure 16. Referring to these figures, the number of stored cells in switch fabric 218e is monitored by Latch and Access Control block 218b. Since this block is realized by hardware, fast access to switch fabric 218e can be achieved as shown in Figure 16. Therefore, even if many ports are accommodated in a node, the access for each port is completed within one cell time or 2.8 microseconds in the case of an 155Mb/s link as shown in Figure 16.

Monitored values are registered in block 218b and are referred by RM cell processing block 218a. When an incoming RM cell is recognized at block 218a, the ER value is calculated and the ER field can be updated by hardware logic in block 218a.

On the other hand, when CPU 215d in control block 210 accesses switch fabric 218e in switching block 209 to set some parameters for operations of block 218e and to monitor the status of it, and with switch fabric 218e coupled to routes 214k and 214m, exclusive control between access from the block 218b and from CPU 215d to switch fabric 218e is required. For this purpose, when CPU 215d accesses switch fabric 215e, it sets a command in Command Register 218d. The access 214j from Latch and Access Control block 218b is prohibited during setting the command in the register 218d. Access routes 214j and 214k, are selected by Selector 218c, according to Command register 218d.

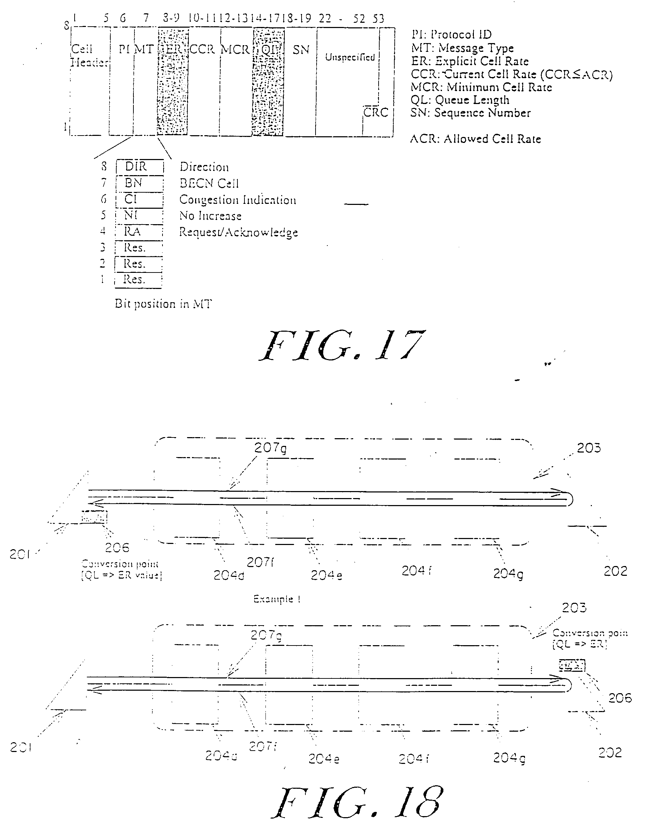

In the above-mentioned approach, the rate control is performed by using the ER field in the RM cells as described above. Alternatively, a variation to the scheme in which the rate control is performed by using the QL field in the RM cell is described in Figure 17. Figure 17 shows the format of an RM cell. Although the QL field has already been assigned in an RM cell, the use of this field has not been defined for the ABR service in the standard. In this approach, the QL field of an incoming RM cell, instead of the ER field, is updated directly according to the number of stored cells in the switch fabric. In short, this approach does not need the conversion from the number of the stored cell to the ER at every switching node, thus simplifying the switching node implementation.

However, the QL field needs to be converted to an ER value which is applied to the allowed cell rate somewhere in the network. Figure 18 shows examples of conversion points, in which cases of conversion are illustrated at source end system 201, or at destination end system 202. In the former case, when a returned RM cell 206 on the backward connection 207f is received at the source end system, its QL field is converted to the ER value. In the latter case, when an RM cell 206 on the forward connection 207g arrives at the destination end system 201, its QL field is converted to the ER value is set to its ER field. Then, this RM cell, e.g. RM cell 206, is returned to source end system 201 through backward connection 207f. Therefore, although the ER field of RM cell can be still updated on backward connection 207f, its QL field of RM cell 206 cannot be updated on the connection 207f.

Figure 19 shows that rate conversion can also be performed at selected nodes in a network. Here, selected node 204h converts the QL field of an incoming RM cell to the ER value, and compares the ER value with the ER field of this RM cell. Then, it updates this field according to the standard specification for ABR, and clears the QL field of this RM cell. Nodes 204j and 204k after the selected node 204h on the forward connection 207g can be operated in the ER mode as specified in the ATM Forum.

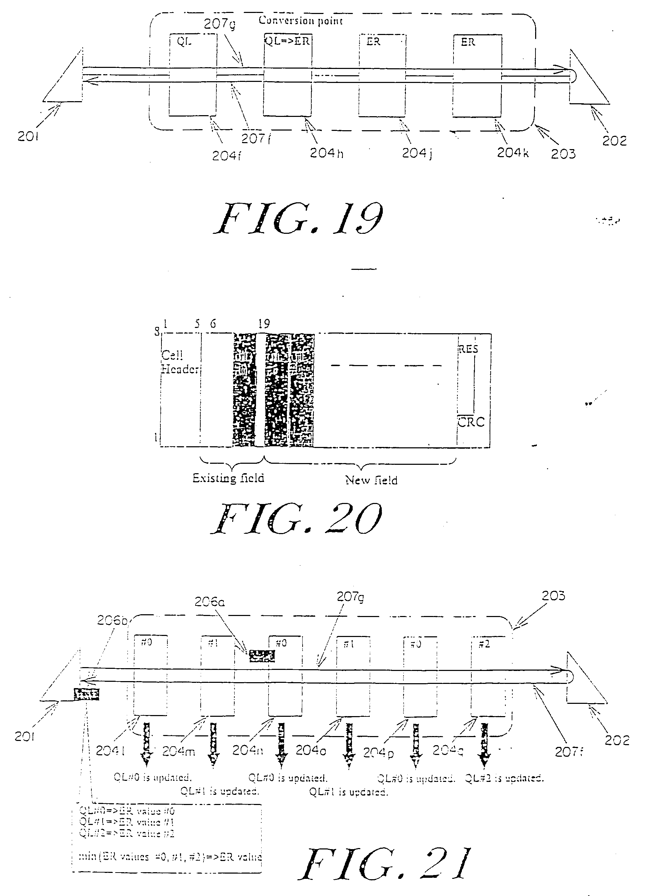

Moreover, if nodes in a network have different types in switch fabrics, buffer capacity or buffering architecture, multiple QL fields can be assigned in an RM cell to carry QL information for each type. Figure 20 shows the format of the RM cell with several QL fields. Figure 21 shows an example of the operation using the RM cell with several QL fields. In this example, a switching system consists of six nodes which are classified into three types, type #0, type #1, and type #2. Three nodes, 241, 204n and 204p, are type #0, two nodes, 204m and 204o, are type #1, and one node 204q, is type #2. A QL field in an RM cell 206a on the forward connection 207g is updated at nodes of the same type. In short, multiple QL fields are updated independently. For example, when RM cell 206b is returned to the source end system 201 through a backward connection 207f, the ER value in each type is calculated by using the QL field of this type. Then, the minimum ER value is used as the ER value to transmit user cell on the forward connection.

Having above indicated a preferred embodiment of the present invention, it will occur to those skilled in the art that modifications and alternatives can be practised within the spirit of the invention. It is accordingly intended to define the scope of the invention only as indicated in the following claims.

## Claims

1. In an ATM network including a source end system, a switching system, and a destination end system, a traffic management system wherein said source end system includes means for generating RM cells together with user data cells;

   wherein said switching system includes means for calculating an ER value based on a QL-based algorithm and means for updating the ER field in said RM cells; and

   wherein said destination end system includes means for returning RM cells to their source end system via said switching system.

2. The system of claim 1 wherein said switching system includes line terminating blocks, a switching block, and a control block, and wherein incoming ATM cells are processed at said line terminating block, are temporarily stored in said switching block, and are switched to a destination line terminating block when said destination line terminating block is ready to send a cell.

3. The system of claim 2, wherein after a line terminating block identifies an incoming RM cell and transfers said incoming RM cell to a control block via a switching block, said control block updates the ER field of said RM cell using an ER value which is periodically calculated according to a QL-based algorithm.

4. The system of claim 2, wherein after a line terminating block identifies an incoming RM cell and transfers it to a control block via a switching block, said control block updates the ER field of said RM cell using an ER value which is calculated according to a QL-based algorithm at a time when an RM cell is received by said control block and sends said RM cell to the associated destination line terminating block via said switching block.

5. The system of claim 2, and further including means for generating a trigger when an incoming RM cell arrives at said destination line terminating block to invoke a QL algorithm and for coupling said trigger to said control block from said destination line terminating block, means for calculating an ER value according to the QL algorithm, and means for sending said calculated ER value to said destination line terminating block, said destination line terminating block updating the ER field of said incoming RM cell responsive thereto.

6. The system of claim 2, wherein said control block periodically reads the number of a stored cell in said switching block, calculates ER values according to a QL algorithm, and writes said ER values to said line terminating blocks, and wherein said destination line terminating block updates the ER field of passing RM cells using the ER value set by said control block.

7. The system of claim 2, wherein said control block periodically reads the number of a stored cell in said switching block, calculates an ER value according to a QL algorithm, and writes said ER value to said switching block, wherein said line terminating block transfers incoming cells to said switching block, and wherein said switching block updates the ER field of the RM cell using the ER value set by said control block and transfers said updated ER field to the associated destination line terminating block.

8. The system of claim 2, wherein when an incoming RM cell is transferred to the associated switching block, and wherein said associated switching block calculates an ER value according to a QL algorithm and updates the ER field of an RM cell and transfers said updated ER field to said destination line terminating block.

9. The system of claim 1, wherein said switching system includes line terminating blocks, a switching block, and a control block, wherein incoming ATM cells are processed at said line terminating block, are switched to said destination line terminating block, and are temporarily stored in said destination line terminating block until they are ready to be transmitted.

10. The system of claim 9, wherein when an incoming RM cell arrives at said destination line terminating block, said destination line terminating block updates the ER field of said incoming RM cell using an ER value which is periodically calculated according to a QL-based algorithm.

11. The system of claim 9, wherein when an incoming RM cell arrives at said destination line terminating block, said destination line terminating block updates the ER field of said incoming RM cell using an ER value which is calculated according to a QL-based algorithm at a time when an RM cell is received by said destination line block.

12. In an ATM network including a source end system, a switching system, and a destination end system, a traffic management system wherein said source end system generates RM cells having a QL field together with data cells, wherein said switching system invokes the QL algorithm and updates the QL field of a passing RM cell according to a QL algorithm, and wherein said destination end system returns RM cells to their source end system via said switching system.

13. The system of claim 12 wherein said switching system includes several types of switches with different buffer sizes and buffering strategies, and wherein multiple QL fields are assigned in an RM cell, with said fields being updated separately according to a QL algorithm at each type of switch.

14. The system of claim 12, and further including means for converting the QL field of a returned RM-cell from said switching system to an ER value, said value being set to the ER field of the RM cell, and the original QL field being reset at said source end system.

15. The system of claim 12, and further including means for converting the QL field of an RM cell from a switching system to an ER value, said value being set to the ER field of an RM cell, and the original QL field being reset at said destination end system.

16. The system of claim 12, wherein said switching system has a number of switches and further including means for converting the QL field of an RM cell to an ER value, said value being set to the ER field of the RM cell, and the original QL field being reset at selected ones of said switches.

Data cells, 12    Forward RM cells, 14              Forward RM cells, 20

Source system, 10                                    Destination system, 22
        Backward RM cells, 16        Switch, 26      Backward RM cells, 18

Network, 24

# FIG. 1

*FIG. 2*

queue length: q
40

converting function: r = f(q)
42

rate value: r
44

| | ER, 46 | |
|---|---|---|

RM cell, 48

# FIG. 3

queuing point 50

r(k), 54        a(k), 56

q(k), 52

k:     arrival time of the k-th RM cell
q(k):   queue length of the outgoing link
r(k):   arriving cell rate of the connection
a(k):   outgoing bandwidth available to the connection
T(k):   RM cell period
d(k):   feedback delay of the RM cell

# FIG. 4

Rate Converting Functions (PCR=1, Nrm=32)

$$r = PCR \times e^{\left(-\frac{g(d)}{Nrm}q\right)}$$

FIG. 5

Switch Buffer Requirement (Nrm=32)

$$Buffer = \frac{Nrm}{g(d)} \ln(\frac{PCR}{r})$$

## FIG. 6

*FIG. 7*

FIG.8

FIG.9

FIG. 10

FIG. II

*FIG. 12*

*FIG. 13*

*FIG. 14*

LT 216a SW 209 218a LT 216b

RM cell processing
(Calc. Comp. & Update)

214i

208a

218b    Latch and Access Control

216c
208d
216d

218c

214j

214n

SEL    Switch
Fabric

214k

2141

218e

Command Reg.

218d

218f    CPU I/F

214m

CNT    210

215d    CPU

## FIG. 15

1 Cell time

#1 #2 #3 #4    #1    #1
Access and latch

Available period
of monitoring    Not available period of monitoring    Available period
of monitoring

start of access from CPU card    end

## FIG. 16

| 1 | 5 6 | 7 | 8-9 | 10-11 | 12-13 | 14-17 | 18-19 | 22 - 52 | 53 |
|---|------|---|-----|-------|-------|-------|-------|---------|-----|
| Cell Header | PI | MT | ER | CCR | MCR | QL | SN | Unspecified | CRC |

PI: Protocol ID
MT: Message Type
ER: Explicit Cell Rate
CCR: Current Cell Rate (CCR≤ACR)
MCR: Minimum Cell Rate
QL: Queue Length
SN: Sequence Number

ACR: Allowed Cell Rate

| 8 | DIR | Direction |
| 7 | BN | BECN Cell |
| 6 | CI | Congestion Indication |
| 5 | NI | No Increase |
| 4 | RA | Request/Acknowledge |
| 3 | Res. | |
| 2 | Res. | |
| 1 | Res. | |

Bit position in MT

# FIG. 17

201   206
Conversion point
[QL => ER value]   207f   207g   204d   204e   204f   204g   203   202

Example 1

201   204d   207f   204e   207g   204f   204g   203
Conversion point
[QL => ER]   206   202

# FIG. 18

23

FIG. 19

FIG. 20

FIG. 21